**Europäisches Patentamt**

**European Patent Office**

**Office européen des brevets**

(11) Numéro de publication : **0 342 074 B1**

(12) **FASCICULE DE BREVET EUROPEEN**

(45) Date de publication du fascicule du brevet :
**10.06.92 Bulletin 92/24**

(21) Numéro de dépôt : **89401090.9**

(22) Date de dépôt : **19.04.89**

(30) Priorité : **02.05.88 FR 8806245**

(43) Date de publication de la demande :
**15.11.89 Bulletin 89/46**

(45) Mention de la délivrance du brevet :
**10.06.92 Bulletin 92/24**

(84) Etats contractants désignés :
**DE GB IT**

(56) Documents cités :
**DE-U- 1 864 549**
**DE-U- 8 616 013**
**FR-A- 2 333 163**
**FR-A- 2 449 826**
**GB-A- 2 018 948**
**US-A- 2 812 175**
**US-A- 4 078 276**

(51) Int. Cl.⁵ : **B60G 7/02, F16F 1/38**

(54) Articulation élastique et suspension de roue de véhicule automobile.

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Gryz, Gilbert**
**132, route de Bondy**
**F-93600 Aulnay-Sous-Bois (FR)**

(74) Mandataire : **Boivin, Claude**
**9, rue Edouard-Charton**
**F-78000 Versailles (FR)**

EP 0 342 074 B1

Jouve, 18, rue Saint-Denis, 75001 PARIS

**Description**

Dans certaines suspensions de véhicule automobile, le bras de suspension est relié à la caisse du véhicule (ou à une traverse fixée à la caisse) au moyen d'une articulation permettant un mouvement relatif des deux pièces autour d'un axe de rotation sensiblement parallèle à la direction longitudinale du véhicule. C'est le cas notamment des suspensions dans lesquelles le bras est en forme de triangle.

Ces articulations comportent habituellement des axes cylindriques en matériau rigide servant à relier le triangle à la caisse du véhicule et disposés suivant l'axe de rotation. Cette disposition entraîne des difficultés lors du montage pour la mise en place de ces axes, car d'autres pièces du véhicule peuvent se trouver au voisinage de l'articulation, en avant ou en arrière de celle-ci. Or, on cherche de plus en plus à l'heure actuelle à monter les véhicules automobiles à l'aide de robots. Il est donc souhaitable de réaliser des articulations dont la disposition permet d'avoir une bonne accessibilité pour le robot.

La présente invention a pour objet une articulation élastique qui résout ce problème.

Cette articulation qui permet de relier une première pièce à une seconde pièce présentant une partie en forme de chape avec deux ailes parallèles, est caractérisée en ce qu'elle comprend un élément rigide intérieur dont la surface extérieure présente deux parties diamétralement opposées en forme de secteurs cylindriques et qui comporte des moyens de guidage pour deux éléments de fixation aux ailes de la seconde pièce, ces moyens de guidage étant écartés l'un de l'autre dans la direction de l'axe des secteurs cylindriques et disposés sensiblement dans leur plan médian, et deux éléments en matière élastique dont chacun est au contact d'une part avec l'une des parties cylindriques et d'autre part avec un élément extérieur faisant partie de la première pièce ou fixé à cette dernière.

Des éléments élastiques peuvent également être disposés entre les tranches de l'élément rigide intérieur et l'élément extérieur.

Les éléments élastiques permettent un débattement angulaire relatif des deux pièces autour de l'axe des portions cylindriques, un déplacement élastique linéaire relatif suivant cet axe, et un déplacement élastique linéaire suivant une direction parallèle au plan des ailes et perpendiculaire à l'axe des portions cylindriques.

De préférence l'articulation comprend un élement rigide extérieur dans lequel l'élément intérieur peut être logé et qui peut être fixé à la première pièce, des éléments élastiques étant interposés entre les deux éléments rigides extérieur et intérieur.

La présente invention a également pour objet une suspension de roue de véhicule automobile comportant un bras relié par au moins une articulation d'une part à la fusée de la roue et d'autre part à la caisse du véhicule. Cette suspension est caractérisée en ce que la ou les articulations reliant le bras à la caisse sont du type défini précédemment.

On a décrit ci-après, à titre d'exemple non limitatif, un mode de réalisation de l'articulation élastique selon l'invention et de la suspension qui en fait application, avec référence aux dessins annexés dans lesquels :

La Figure 1 est une vue en perspective des éléments de l'articulation et des pièces qu'elle relie;

La Figure 2 est une vue en coupe transversale de l'articulation suivant II-II de la Figure 3;

La Figure 3 est une vue en coupe axiale suivant III-III de la Figure 2;

La Figure 4 est une vue semblable à la Figure 3 d'une variante;

La Figure 5 est une vue en perspective de la suspension.

Telle qu'elle est représentée au dessin, l'articulation selon l'invention est destinée à assurer la liaison entre une pièce A présentant une partie en forme de chape avec deux ailes parallèles $A_1$ et une pièce B représentée en coupe, les deux pièces devant pivoter l'une par rapport à l'autre autour d'un axe X-X'.

Cette articulation comprend un élément intérieur rigide 1 et un élément extérieur rigide 2. La surface extérieure de l'élément 1 présente deux parties 1a et 1b qui sont en forme de secteurs cylindriques et diamétralement opposées; cet élément porte deux paires 1c et 1d de colonnettes périphériques dirigées radialement et diamétralement opposées, les deux paires étant écartées l'une de l'autre dans la direction de l'axe X-X' de la pièce 1 et disposées sensiblement dans le plan médian des parties 1a et 1b. Ces colonnettes sont creuses et permettent le passage de boulons de fixation 3 traversant des trous $A_2$ des ailes $A_1$, les deux trous $A_2$ d'une même aile étant écartés l'un de l'autre dans la direction de l'axe de pivotement des deux pièces A et B. L'élément 2 a la forme d'une boîte ouverte sur deux de ses faces longitudinales opposées et a des dimensions lui permettant de contenir l'élément 1; sur les autres faces il peut être fixé sur la pièce B par exemple par encliquetage et comporte à cet effet des excroissances 4 propres à pénétrer dans un logement $B_1$ de la pièce B; on pourrait également prévoir des excroissances telles que 5 enserrant cette pièce B.

Des éléments en matériau élastique 6a et 6b sont interposés entre la pièce 1 et les faces longitudinales fermées de la pièce 2; ces éléments comportent des inserts 7a et 7b et sont adhérisés à la pièce 1 et/ou à la pièce 2. Des éléments en matériau élastique 8a et 8b sont également interposés entre les tranches de la pièce 1 et les faces latérales de la pièce 2; ces éléments comportent des inserts 9a et 9b et sont adhérisés à la pièce 1 et/ou à la pièce 2.

L'articulation qui vient d'être décrite est facile à monter. On peut contrôler les raideurs en fonction de la direction du mouvement, les éléments élastiques 6a et 6b qui interviennent lors d'un effort situé dans un plan perpendiculaire à l'axe X-X' pouvant avoir une raideur différente de celle des pièces 8a et 8b qui interviennent lors d'un effort dirigé selon cet axe.

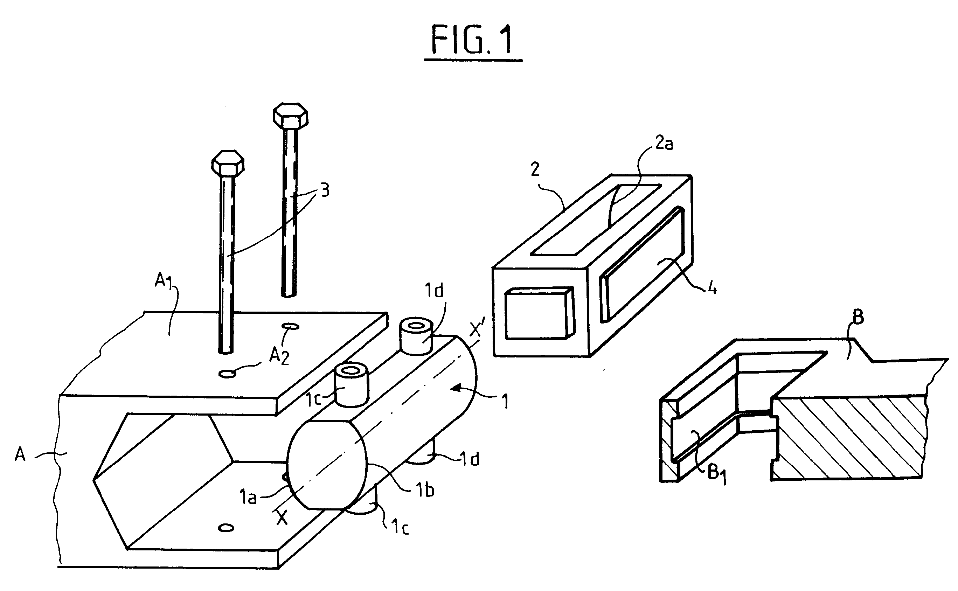

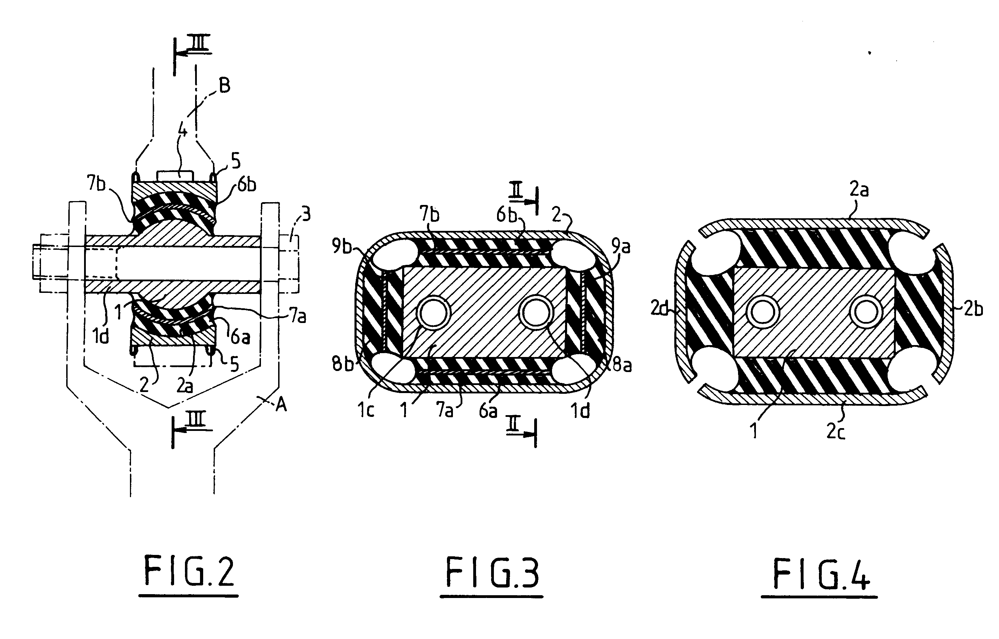

Il est préférable que les éléments élastiques soient précontraints. Pour cela, on peut prévoir un élément extérieur 2 en une seule pièce, comme représenté aux Figures 1 à 3 et donner à l'ensemble des dimensions qui permettent d'obtenir cette précontrainte.

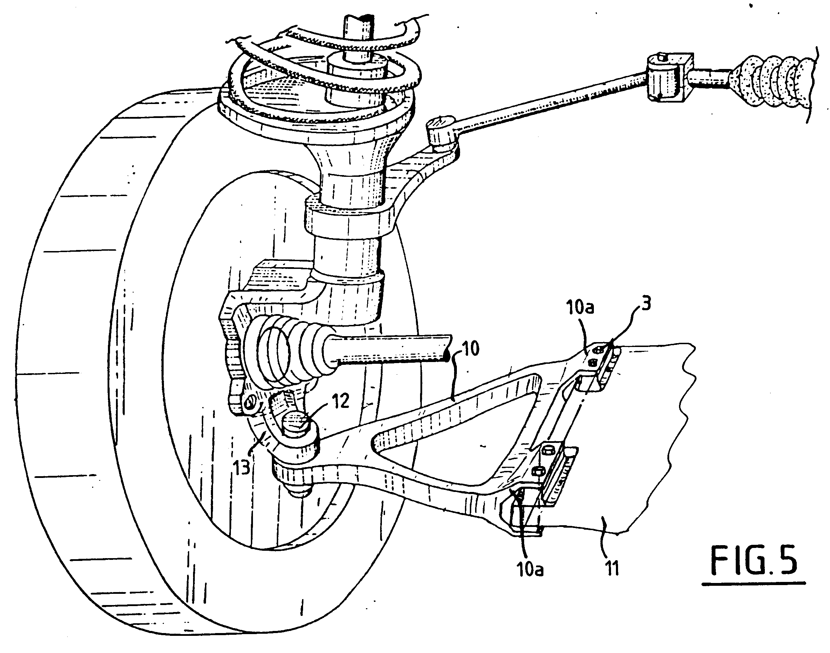

On peut également réaliser l'élément extérieur 2 en plusieurs pièces 2a, 2b 2c et 2d, comme représenté à la Figure 4. Cette solution est intéressante car, initialement, la matière élastique n'est pas comprimée. C'est au montage dans la pièce B que les différentes parties de l'élement extérieur se rapprochent en comprimant ainsi la matière élastique. A la Figure 4, l'élément est en quatre parties; mais il pourrait n'en comporter que deux respectivement les deux portions adjacentes 2c et 2d et les deux portions adjacentes 2b et 2c.

La Figure 5 montre l'application de l'articulation selon l'invention à une suspension de roue d'un véhicule automobile. Cette suspension comporte un triangle de suspension 10 qui porte deux chapes 10a reliées chacune à la caisse 11 du véhicule par une articulation selon l'invention et qui est relié par un pivot 12 à la fusée 13 de la roue. Les boulons 3 sont verticaux, ce qui permet de les introduire par dessous le véhicule. Il va de soi que la présente invention ne doit pas être considérée comme limitée au mode de réalisation décrit et représenté mais en couvre, au contraire, toutes les variantes. C'est ainsi, en particulier, qu'on peut ne pas prévoir les éléments 8a et 8b. On pourrait également prévoir une masse en matière élastomère qui, au repos, ne serait pas en contact avec l'élément extérieur 2, le contact et, par suite, la compression de la matière élastomère ne se faisant que si l'amplitude du mouvement dans la direction de l'axe X-X' dépasse une valeur prédéterminée. Par ailleurs, les faces internes 2a de la pièce 2 pourraient être planes et non cylindriques. Enfin, au lieu d'utiliser les colonnettes 1c et 1d, on pourrait utiliser une pièce 1 de forme parallélépipédique ayant deux renflements latéraux constituant lesdites parties cylindriques, les moyens de gui dage des éléments de fixation étant constitués par des perçages ayant même orientation que les colonnettes.

**Revendications**

1. Articulation élastique destinée à relier une première pièce B à une seconde pièce A présentant une partie en forme de chape avec deux ailes parallèles A$_1$, caractérisée en ce qu'elle comprend un élément rigide intérieur (1) dont la surface extérieure présente deux parties (1a et 1b) diamétralement opposées en forme de secteurs cylindriques et qui comporte des moyens de guidage (1c et 1d) pour deux éléments de fixation (3) aux ailes A$_1$ de la seconde pièce, ces moyens de guidage étant écartés l'un de l'autre dans la direction de l'axe des secteurs cylindriques et disposés sensiblement dans leur plan médian, et deux éléments en matière élastique (6a et 6b) dont chacun est au contact d'une part avec l'une des parties cylindriques (1a et 1b) et d'autre part avec un élément extérieur (2) faisant partie de la première pièce ou fixé à cette dernière.

2. Articulation selon la revendication 1, caractérisée en ce qu'elle comprend en outre des éléments élastiques (8a et 8b) disposés entre les tranches de l'élément rigide intérieur et l'élément extérieur (2).

3. Articulation selon la revendication 1 ou 2, caractérisée en ce que l'élément extérieur (2) contient l'élément intérieur, est indépendant de la première pièce B, et peut être fixé à celle-ci.

4. Articulation selon la revendication 3, caractérisée en ce que l'élément extérieur (2) est d'un seul tenant.

5. Articulation selon la revendication 3, caractérisée en ce que l'élément extérieur (2) est réalisé en plusieurs parties séparées.

6. Articulation selon l'une des revendications précédentes, caractérisée en ce que les moyens de guidage sont constitués par des colonnettes creuses (1c et 1d) disposées radialement et permettant le passage de boulons de fixation (3).

7. Articulation selon l'une quelconque des revendications 1 à 5, caractérisée en ce que l'élément (1) a une forme parallélépipédique avec deux renflements latéraux constituant lesdits secteurs cylindriques et en ce que les moyens de guidage des éléments de fixation (3) sont constitués par des perçages prévus dans cet élément (1).

8. Articulation selon l'une quelconque des revendications 1 à 7, caractérisée en ce qu'elle comporte en outre au moins un insert rigide (7a-7b, 9a ou 9b) à l'intérieur de l'un au moins des éléments élastiques.

9. Articulation selon l'une quelconque des revendications 1 à 8, caractérisée en ce que chaque élément élastique est adhérisé à l'élément rigide intérieur (1) et/ou à l'élément extérieur (2).

10. Suspension de roue d'un véhicule automobile comportant un bras (10) relié par au moins une articulation d'une part à la fusée (13) de la roue et d'autre part à la caisse (11) du véhicule, caractérisée en ce que la (ou les) articulation (s) reliant le bras (10) à la caisse (11) du véhicule est du type défini à l'une quelconque des revendications 1 à 9.

11. Suspension selon la revendication 10, caractérisée en ce que la chape (10a) est portée par le bras (10).

12. Suspension selon la revendication 10 ou 11, caractérisée en ce que le bras est un triangle de suspension.

**Patentansprüche**

1. Elastisches Gelenk, welches bestimmt ist, ein erstes Teil B mit einem zweiten Teil A zu verbinden, das einen Abschnitt in form eines Gabelstückes mit zwei parallen Schenkeln $A_1$ aufweist, **dadurch gekennzeichnet** , daß es ein starres inneres Element (1) enthält, dessen Außenfläche zwei diametral gegenüberliegende Anteile (1a und 1b) in form von zwei zylindrischen Abschnitten besitzt, und das führungseinrichtungen (1c und 1d) für zwei Elemente (3) zur Befestigung an den Schenkeln $A_1$ des zweiten Teiles aufweist, wobei diese Führungseinrichtungen in der Richtung der Achse der zylindrischen Abschnitte voneinander einen Abstand aufweisen und genau in ihrer Mittelebene angeordnet sind, und daß es zwei Elemente (6a und 6b) aus elastischem Material aufweist, von denen jedes in Berührung steht einerseits mit dem einen der zylindrischen Abschnitte (1a und 1b) und andererseits mit einem äußeren Element (2), das einen Abschnitt des ersten Teiles bildet oder an dem letzteren befestigt ist.

2. Gelenk nach Anspruch 1, **dadurch gekennzeichzeichnet** , daß es außerdem elastische Elemente (8a und 8b) enthält, die zwischen den Schnittflächen des starren inneren Elementes und dem äußeren Element (2) angeordnet sind.

3. Gelenk nach Anspruch 1 oder 2, **dadurch gekennzeichnet**, daß das äußere Element (2), das das innere Element (1) enthält, von dem Teil B unabhängig ist und an diesem befestigt werden kann.

4. Gelenk nach Anspruch 3, **dadurch gekennzeichnet** , daß das äußere Element (2) aus einem Stück besteht.

5. Gelenk nach Anspruch 3, **dadurch gekennzeichnet** , daß das äußere Element (2) aus mehreren getrennten Stücken besteht.

6. Gelenk nach einem der vorhergehenden Ansprüche, **dadurch gekennzeichnet** , daß die Führungs-einrichtungen aus kleinen hohlen Säulen (1c und 1d) bestehen, die radial angeordnet sind und den Durchgang von Befestigungsschrauben (3) ermöglichen.

7. Gelenk nach einem der Ansprüche 1 bis 5, **dadurch gekennzeichnet,** daß das Element (1) die Form eines Parallelepipeds mit zwei seitlichen Ausbauchungen aufweist, welche die zylindrischen Abschnitte bilden, und dadurch, daß die Führungseinrichtungen für die Befestigungselemente (3) durch in dem Element (1) vorgesehene Bohrungen gebildet sind.

8. Gelenk nach einem der Ansprüche 1 bis 7, **dadurch gekennzeichnet** , daß es außerdem wenigstens eine starre Einlage (7a-7b, 9a oder 9b) im Inneren wenigstens des einen der elastischen Elemente aüfweist.

9. Gelenk nach einem der Ansprüche 1 bis 8, **dadurch gekennzeichnet**, daß jedes elastische Element am inneren starren Element (1) und/oder am äußeren Element (2) angeklebt ist.

10. Radaufhängung eines Kraftfahrzeuges mit einem Arm (10), der durch wenigstens ein Gelenk einerseits mit dem Achsschenkel (13) des Rades und andererseits mit der Karosserie (11) des Fahrzeuges verbunden ist, **dadurch gekennzeichnet,** daß das Gelenk (oder die Gelenke), das (oder die) den Arm (10) mit der Karosserie (11) des Fahrzeuges verbindet,die Ausführung aufweist, die in einem der Ansprüche 1 bis 9 definiert ist.

11. Aufhängung nach Anspruch 10, **dadurch gekennzeichnet,** daß das Gabelstück (10a) von dem Arm (10) getragen ist.

12. Aufhängung nach Anspruch 10 oder 11, **dadurch gekennzeichnet,** daß der Arm als dreieckförmige Aufhängung ausgebildet ist.

**Claims**

1. Elastic joint for connecting a first piece B to a second piece A having one yoke-shaped portion with two parallel wings A1, wherein it includes one internal rigid element (1) whose outer surface has two diametrically opposing portions (1a and 1b) in the shape of cylindrical sectors and which comprise means (1c and 1d) for guiding two fixing elements (3) to be fixed to the wings A1 of the second piece, these guiding means being spaced from each other in the direction of the axis of the cylindrical sectors and disposed approximately inside their median plane, and two elastic elements, each being in contact with firstly one of the cylindrical portions (1a and 1b) and secondly with one external element (2) forming a portion of the first piece or secured to the latter.

2. Joint according to claim 1, wherein it further includes elastic elements (8a and 8b) disposed between the sections of the internal rigid element and the external element (2).

3. Joint according to claim 1 or 2, wherein the external element (2) contains the internal element, is independent of the first piece B and may be secured to the latter.

4. Joint according to claim 3, wherein the external element (2) consists of solely one piece.

5. Joint according to claim 3, wherein the external element (2) is embodied by several separate portions.

6. Joint according to any one of the preceding claims, wherein the guiding means are constituted by hollow small columns (1c and 1d) disposed radially and allowing for the passage of fixing bolts (3).

7. Joint according to any one of claims 1 to 5, wherein the element (1) has a parallelpiped shape with two lateral swellings constituting said cylindrical sectors and wherein the means for guiding the fixing elements (3) are constituted by perforations provided inside this element (1).

8. Joint according to any one of claims 1 to 7, wherein it further comprises at least one rigid insert (7a-7b, 9a or 9b) inside at least one of the elastic elements.

9. Joint according to any one of claims 1 to 8, wherein each elastic element is embodied so as to adhere to the internal rigid element (1) and/or to the external element (2).

10. Wheel suspension of a motor vehicle comprising one arm (10) connected by at least one joint to firstly the spindle (13) of the wheel and secondly to the body (11) of the vehicle, wherein the joint(s) connecting the arm (10) to the body (11) of the vehicle is/are of the type defined in any one of claims 1 to 9.

11. Suspension according to claim 10, wherein the yoke (10a) is borne by the arm (10).

12. Suspension accoridng to claim 10 or 11, wherein the arm is a suspension arm.

# FIG.1

FIG.4

FIG.3

FIG.2

EP 0 342 074 B1

FIG.5